# EUROPÄISCHE PATENTSCHRIFT

(11) **EP 3 354 363 B1**
(45) Veröffentlichungstag und Bekanntmachung des Hinweises auf die Patenterteilung: **04.12.2019**
(21) Anmeldenummer: 18154142.6
(22) Anmeldetag: 30.01.2018
(51) Int. Cl.: B21D 37/14, B65G 1/04, B21D 5/02

(54) **BIEGEWERKZEUG-SPEICHERVORRICHTUNG**
BENDING TOOL STORAGE DEVICE
DISPOSITIF DE STOCKAGE POUR OUTIL DE PLIAGE

(30) Priorität: 31.01.2017 AT 500662017
(43) Veröffentlichungstag der Anmeldung: 01.08.2018
(73) Patentinhaber: TRUMPF Maschinen Austria GmbH & Co. KG., 4061 Pasching (AT)
(72) Erfinder: TOMASIN, Fabio, 10098 Rivoli (TO) (IT)
(74) Vertreter: Burger, Hannes

(56) Entgegenhaltungen:
- EP-A1- 1 364 742
- EP-A1- 2 946 846
- WO-A1-2017/004649
- DE-A1- 2 031 442
- GB-A- 2 282 803

## Beschreibung

Die Erfindung betrifft eine Biegewerkzeug-Speichervorrichtung gemäß dem Oberbegriff des Anspruch 1. Die Erfindung betrifft auch eine Anordnung aus einer Biegewerkzeug-Speichervorrichtung und zumindest zwei Biegepressen sowie ein Verfahren zum Betreiben einer Biegewerkzeug-Speichervorrichtung.

Die EP 2 946 846 A1 offenbart eine gattungsgemäße Werkzeugwechselvorrichtung für eine Umformpresse mit einem Werkzeugmagazin und einer Übertragungsvorrichtung zur Übertragung der Umformwerkzeuge vom Werkzeugmagazin zur Umformpresse und umgekehrt. Die Übertragungsvorrichtung umfasst eine antreibbare Schubkette zur Übertragung von Druck- und Zugkräften. Das Werkzeugmagazin ist als antreibbare, drehbar gelagerte, und in Gebrauchslage horizontal ausgerichtete, Scheibe ausgebildet.

Nachteilig an einer derartigen Lösung ist die mangelnde Flexibilität. Die Werkzeugwechselvorrichtung kann nur in einer bestimmten Lage und nur an eine einzige Umformpresse angebunden werden.

Aufgabe der vorliegenden Erfindung war es, die Nachteile des Standes der Technik zu überwinden und eine Biegewerkzeug-Speichervorrichtung zur Verfügung zu stellen, mittels derer die Möglichkeit geschaffen wird, mehrere Biegepressen gleichzeitig an die Speichervorrichtung anzubinden und mit Biegewerkzeugen zu beschicken. Dadurch sollen die Flexibilität und die Anwendungsmöglichkeiten erweitert werden, gleichzeitig die Taktzeiten verringert werden. Die Biegewerkzeug-Speichervorrichtung soll sich durch eine einfache und zuverlässige Konstruktion auszeichnen und eine Vielzahl an verschiedenen Werkzeug-Verschiebemanövern ermöglichen.

Diese Aufgabe wird mit einer eingangs erwähnten Biegewerkzeug-Speichervorrichtung dadurch gelöst, dass die Transporteinrichtung relativ zum Gestell und relativ zum Werkzeugspeicher um eine zweite Drehachse, die im Wesentlichen mit der ersten Drehachse zusammenfällt, drehbar ist.

Durch diese Maßnahme wird die Flexibilität der Speichervorrichtung erhöht. Das Transportmittel der Transporteinrichtung kann nun - je nach Drehstellung der Transporteinrichtung relativ zum Gestell - in verschiedene Richtungen ausgefahren werden. Dies eröffnet die Möglichkeit, mehr als nur eine Biegepresse an die Speichervorrichtung anzubinden. Ein und dasselbe Transportmittel kann nun verwendet werden, um nacheinander verschiedene Biegepressen mit Biegewerkzeugen zu beschicken bzw. von verschiedenen Biegepressen Biegewerkzeuge zurückzuholen. Nach einem Beschickungs- bzw. Rückholvorgang bei einer ersten Biegepresse muss lediglich die Transporteinrichtung in die Richtung einer zweiten Biegepresse gedreht werden, um auch dort einen Beschickungs- bzw. Rückholvorgang durchzuführen.

Da nunmehr sowohl der Werkzeugspeicher als auch die Transporteinrichtung im Wesentlichen denselben Drehfreiheitsgrad - vorzugsweise also dieselbe Drehachse aufweisen (d.h. die erste Drehachse fällt mit der zweiten Drehachse zusammen), werden außerdem komplexe Rangiermanöver möglich, bei denen alle möglichen Relativdrehungen ausgenutzt werden können: Drehung des Werkzeugspeichers relativ zum Gestell, Drehung der Transporteinrichtung relativ zum Gestell, Relativdrehung zwischen Werkzeugspeicher und Transporteinrichtung.

Die Führungsschienen des Werkzeugspeichers liegen in einer Ebene, die im Wesentlichen normal zur ersten Drehachse ist. Es wird bevorzugt, wenn die Ebene, in der die Führungsschienen verlaufen, im Wesentlichen horizontal ist. Dadurch wird die Anbindung an Biegepressen, die üblicherweise ebenfalls horizontal verlaufende Werkzeughalterungen aufweisen, vereinfacht.

An dieser Stelle sei nochmals erwähnt, dass die Transporteinrichtung neben dem eigentlichen Transportmittel auch eine Ablage umfasst und dass das Transportmittel relativ zur Ablage bewegbar ist. Die Ablage ist als Teil der Transporteinrichtung somit ebenfalls um die zweite Drehachse drehbar.

Aufgrund ihres radialen Verlaufs oder Verlaufs mit radialer Komponente weisen die Führungsschienen des Werkzeugspeichers - bezogen auf die Drehachse -drehachsennahe Enden (bzw. innere Enden) und drehachsenferne Enden (äußere Enden) auf. Die Ablage befindet sich im Bereich der drehachsennahen Enden (oder zwischen drehachsennahen Enden und der Drehachse) und schließt - bei fluchtender Ausrichtung - an das drehachsennahe Ende einer Führungsschiene an.

Das Transportmittel kann jedes geeignete Mittel sein, das aus der Ablage ausgefahren, entlang der Führungsschienen des Werkzeugspeichers bewegt und Biegewerkzeuge, die von den Führungsschienen gehaltene Biegewerkzeuge verschieben kann. Vorzugsweise ist das Transportmittel derart ausgebildet, dass es in der Ablage und in den Führungsschienen geführt ist. Dazu kann das Transportmittel einen Führungsabschnitt aufweisen, der mit der Ablage und den Führungsschienen zusammenwirkt bzw. in diese eingesetzt ist.

Die Biegewerkzeuge weisen jeweils einen Halte- bzw. Führungsabschnitt auf, mit dem sie in den Führungsschienen des Werkzeugspeichers bzw. in einer Biegewerkzeughalterung einer Biegepresse eingesetzt und geführt sind, und einen Formabschnitt, der mit dem zu biegenden Werkstück in Berührung kommt und dieses formt.

Eine Biegewerkzeug-Speichervorrichtung dient nicht nur der Speicherung von Biegewerkzeugen, sondern auch zum Beschicken von Biegepressen, in denen Werkstücke, insbesondere (Stahl-)Bleche, durch Betätigung eines Pressantriebes zwischen einem (in einer Oberwerkzeughalterung gehaltenen) Oberwerkzeug und einem (in einer Unterwerkzeughalterung gehaltenen) Unterwerkzeug geformt werden.

Eine bevorzugte Ausführungsform zeichnet sich dadurch aus, dass die Transporteinrichtung einen Antrieb zum Ausfahren bzw. Einfahren des Transportmittels aufweist, wobei die Ablage zusammen mit dem Antrieb eine um die zweite Drehachse drehbare Einheit bildet. Der Antrieb ist somit mit der Ablage derart verbunden, dass er sich mit der Ablage mit dreht. Dadurch kann die Übertragung der Bewegung vom Antrieb auf das Transportmittel sehr einfach konzipiert werden, ohne eine Relativdrehbewegung berücksichtigen zu müssen. Vorzugsweise ist der Antrieb mit der Ablage fest (direkt oder indirekt) verbunden. Der Antrieb wirkt zwar auf das Transportmittel, verändert seine Position beim Ausfahren des Transportmittels aber nicht.

Eine bevorzugte Ausführungsform zeichnet sich dadurch aus, dass die Transporteinrichtung
- ein ausfahrbares, flexibles Zug- und Druckübertragungsmittel, insbesondere eine Kette, ein Band oder ein Seil, umfasst, welches an dem Transportmittel angebunden ist, und
- einen Speicher, insbesondere eine Aufrolleinrichtung oder einen Speicher mit spiralartig und/oder mäanderartig verlaufender Kulissenführung, zum Halten des Zug- und Druckübertragungsmittels im eingefahrenen Zustand
umfasst, wobei die Ablage zusammen mit dem Speicher eine um die zweite Drehachse drehbare Einheit bildet. Diese Variante ist besonders bevorzugt, da das vorübergehende Speichern des Zug-/Druckübertragungsmittels im besagten Speicher bzw. dessen Ausfahren aus dem Speicher unbeeinflusst von der Drehposition der Transporteinrichtung erfolgen kann. Das Zug-/Druckübertragungsmittel wird durch den Antrieb ausgefahren, wodurch das Transportmittel aus der Ablage in eine (mit der Ablage fluchtende) Führungsschiene bewegt wird, um dort Biegewerkzeuge zu verschieben. Bei angebundener Biegepresse wird das Zug-/Druckübertragungsmittel soweit ausgefahren, dass das Transportmittel bis in die Werkzeughalterung der Biegepresse fährt, um dort Biegewerkzeuge zu positionieren oder von dort Biegewerkzeuge abzuholen.

Eine bevorzugte Ausführungsform zeichnet sich dadurch aus, dass die Biegewerkzeug-Speichervorrichtung eine vorzugsweise automatisiert betätigbare Kopplungseinrichtung aufweist, durch die die Transporteinrichtung mit dem Werkzeugspeicher koppelbar ist, wodurch der Drehfreiheitsgrad der Transporteinrichtung relativ zum Werkzeugspeicher blockiert ist. In dieser Variante kann die Transporteinrichtung durch Verdrehen des Werkzeugspeichers in die gewünschte Drehposition gebracht werden. Ein eigener Antrieb für die Transporteinrichtung ist hier nicht nötig.

Eine bevorzugte Ausführungsform zeichnet sich dadurch aus, dass die Biegewerkzeug-Speichervorrichtung eine vorzugsweise automatisiert betätigbare Kopplungseinrichtung aufweist, durch die die Transporteinrichtung mit dem Gestell koppelbar ist, wodurch der Drehfreiheitsgrad der Transporteinrichtung relativ zum Gestell um die zweite Drehachse blockiert ist.

Die Kopplungseinrichtung(en) können durch jede geeignete Arretierung zwischen Transporteinrichtung und Werkzeugspeicher gebildet sein. Beispielsweise kann ein betätigbares Verriegelungselement (z.B. ein Stift), das an der Transporteinrichtung oder dem Werkzeugspeicher gelagert ist, mit einer entsprechenden Verriegelungsstruktur (z.B. einer Hülse) am anderen Teil in Eingriff gebracht werden. Die Kopplungseinrichtung(en) können durch einen eigens dafür vorgesehenen Aktuator oder (mittels eines Betätigungselementes) von Hand zwischen der Kopplungsstellung und der gelösten Stellung geschaltet werden.

Eine bevorzugte Ausführungsform zeichnet sich dadurch aus, dass die Biegewerkzeug-Speichervorrichtung einen ersten Drehantrieb aufweist, durch den der Werkzeug-speicher relativ zum Gestell um die erste Drehachse drehbar ist.

Eine bevorzugte Ausführungsform zeichnet sich dadurch aus, dass die Biegewerkzeug-Speichervorrichtung einen zweiten Drehantrieb aufweist, durch den die Transporteinrichtung unabhängig von dem Werkzeugspeicher relativ zum Gestell um die zweite Drehachse drehbar ist. Dadurch können gewünschte Relativdrehstellungen und Rangiermanöver noch schneller durchgeführt werden

Eine bevorzugte Ausführungsform zeichnet sich dadurch aus, dass das Transportmittel eine lösbare Kupplung zum Anbinden von Biegewerkzeugen an das Transportmittel aufweist. Dadurch kann das Transportmittel die Biegewerkzeuge nicht nur schieben, sondern auch ziehen. Die Kupplung weist einen freigebenden (gelösten) Zustand und einen ankoppelnden Zustand auf und kann durch einen, vorzugsweise am Transportmittel angeordneten Aktuator betätigbar sein. Die Kupplung kann z.B. als mechanische Kupplung, magnetische Kupplung oder als Ansaugvorrichtung ausgebildet sein. Die Kupplung kann eine kraftschlüssige und/oder formschlüssige Verbindung mit dem Biegewerkzeug herstellen. Der Aktuator zum Betätigen der Kupplung kann eine Zylinder-Kolben-Einheit, einen Linearantrieb, einen Motor, eine Unterdruckeinrichtung und/oder eine elektromagnetische Einrichtung umfassen.

Eine bevorzugte Ausführungsform zeichnet sich dadurch aus, dass das Transportmittel durch ein entlang der Führungsschienen, vorzugsweise in den Führungsschienen des Werkzeugspeichers verfahrbares Shuttle, insbesondere in Form eines Schlittens oder Wagens, ausgebildet ist.

Eine bevorzugte Ausführungsform zeichnet sich dadurch aus, dass das Zug- und Druckübertragungsmittel entlang der Führungsschienen, vorzugsweise in den Führungsschienen des Werkzeugspeichers verfahrbar ist.

Eine bevorzugte Ausführungsform zeichnet sich dadurch aus, dass der Werkzeugspeicher ringförmig oder teilringförmig ist, wobei die Transporteinrichtung im Zentrumsbereich des Werkzeugspeichers angeordnet ist.

Eine bevorzugte Ausführungsform zeichnet sich dadurch aus, dass die Biegewerkzeug-Speichervorrichtung
- zumindest zwei Werkzeugspeicher, die jeweils an dem Gestell um eine erste, vorzugsweise vertikale Drehachse drehbar gelagert sind und eine Vielzahl von Führungsschienen zum Halten und Führen von Biegewerkzeugen aufweisen, wobei die Führungsschienen bezogen auf die Drehachse jeweils in radialer Richtung oder in einer Richtung mit radialer Komponente verlaufen, und
- zumindest zwei an dem Gestell gelagerte Transporteinrichtungen, die jeweils ein ausfahrbares Transportmittel zum Verschieben von Biegewerkzeugen entlang der Führungsschienen der Werkzeugspeicher und eine Ablage, vorzugsweise in Form einer Führungsschiene, die das Transportmittel im eingefahrenem Zustand hält, aufweisen,
wobei die Ablagen der Transporteinrichtungen jeweils im Bereich der drehachsennahen Enden der Führungsschienen des jeweiligen Werkzeugspeichers angeordnet sind und in verschiedenen Relativdrehstellungen zwischen Transporteinrichtung und Werkzeugspeicher jeweils mit einer anderen Führungsschiene des Werkzeugspeichers in fluchtender Ausrichtung stehen,
und wobei die Transporteinrichtungen relativ zum Gestell und relativ zu den Werkzeugspeichern um eine zweite Drehachse, die im Wesentlichen mit der ersten Drehachse zusammenfällt, drehbar sind.

Es ist somit jedem Werkzeugspeicher eine Transporteinrichtung zugeordnet. Einer der Werkzeugspeicher kann als Oberwerkzeugspeicher und der andere als Unterwerkzeugspeicher ausgebildet sein; in Anlehnung an eine Biegepresse liegen diese Werkzeugspeicher übereinander, wobei die Führungsschienen des oberen Werkzeugspeichers den Führungsschienen des unteren Werkzeugspeichers zugewandt sind.

In einer bevorzugten Weiterbildung bilden die beiden Transporteinrichtungen eine um die zweite Drehachse drehbare Einheit, d.h. heißt sie können immer nur gemeinsam gedreht werden.

Bevorzugt ist wenn die Speichervorrichtung zumindest zwei (um die erste Drehachse drehbare) Werkzeugspeicher, denen jeweils eine (um die zweite Drehachse drehbare) Transporteinrichtung zugeordnet ist, aufweist. Einer der Werkzeugspeicher ist als Oberwerkzeugspeicher und der andere als Unterwerkzeugspeicher ausgebildet. In Anlehnung an eine Biegepresse liegen diese Werkzeugspeicher übereinander, wobei die Führungsschienen des oberen Werkzeugspeichers den Führungsschienen des unteren Werkzeugspeichers zugewandt sind.

Die Aufgabe wird auch gelöst durch eine Anordnung aus einer erfindungsgemäßen Biegewerkzeug-Speichervorrichtung und zumindest zwei Biegepressen, die jeweils Biegewerkzeughalterungen in Form von Führungsschienen aufweisen, wobei die zumindest zwei Biegepressen an die Biegewerkzeug-Speichervorrichtung angebunden und durch diese mit Biegewerkzeugen beschickbar sind, und wobei die Biegewerkzeughalterungen der einen Biegepresse und die Biegewerkzeughalterungen der anderen Biegepresse zueinander geneigt sind, vorzugsweise um einen Winkel von zumindest 30°, und wobei vorzugsweise die Biegewerkzeughalte-rungen der zumindest zwei Biegepressen in verschiedenen Drehstellungen des Werkzeugspeichers relativ zum Gestell jeweils mit einer anderen Führungsschiene des Werkzeugspeichers in fluchtender Ausrichtung stehen. An dieser Stelle sei angemerkt, dass zwischen Werkzeugspeicher und Biegepresse stationäre Verbindungsschienen oder Zwischenablagen angeordnet sein können, über die die Biegewerkzeuge zur Biegepresse gelangen.

Die Aufgabe wird auch gelöst durch ein Verfahren zum Betreiben einer erfindungsgemäßen Biegewerkzeug-Speichervorrichtung und/oder einer erfindungsgemäßen Anordnung, umfassend die Schritte:
(a) Verfahren des Transportmittels entlang einer Führungsschiene des Werkzeugspeichers,
(b) optional: Einfahren des Transportmittels in die Ablage,
(c) Drehen der Transporteinrichtung relativ zum Gestell um die zweite Drehachse und
(d) Verfahren des Transportmittels entlang einer Führungsschiene des Werkzeugspeichers. Bevor die Transporteinrichtung relativ zum Werkzeugspeicher gedreht werden kann, muss das Transportmittel und gegebenenfalls das Zug-/Druckübertragungsmittel eingefahren werden, d.h. aus der Führungsschiene des Werkzeugspeichers zurückgeholt werden und in der Ablage bzw. im Speicher ,zwischengelagert' werden. Schritt (b) ist dann nicht erforderlich, wenn die Transporteinrichtung zusammen mit dem Werkzeugspeicher gedreht wird (wenn sie z.B. mittels einer Kopplungseinrichtung drehfest miteinander verbunden sind).

Eine bevorzugte Ausführungsform zeichnet sich dadurch aus, dass während des Schrittes (a) und/oder während des Schrittes (d) durch das Transportmittel zumindest ein in der Führungsschiene des Werkzeugspeichers gehaltenes Biegewerkzeug entlang der Führungsschiene verschoben wird,
und/oder dass während des Schrittes (c) die Transporteinrichtung mit dem Werkzeugspeicher gekoppelt ist und gemeinsam mit dem Werkzeugspeicher relativ zum Gestell um die Drehachse gedreht wird.

Eine bevorzugte Ausführungsform zeichnet sich dadurch aus, dass der Werkzeugspeicher relativ zum Gestell und relativ zur Transporteinrichtung um die erste Drehachse gedreht wird, vorzugsweise vor oder nach dem Schritt (a) und/oder vor und/oder nach dem Schritt (d), und/oder dass die Transporteinrichtung relativ zum Gestell und relativ zum Werkzeugspeicher um die zweite Drehachse gedreht wird, vorzugsweise vor oder nach dem Schritt (a) und/oder vor und/oder nach dem Schritt (d).

Zum besseren Verständnis der Erfindung wird diese anhand der nachfolgenden Figuren näher erläutert.

Es zeigen jeweils in stark vereinfachter, schematischer Darstellung:
- Fig. 1: eine Biegewerkzeug-Speichervorrichtung mit zwei Biegepressen von oben;
- Fig. 2: eine Biegewerkzeug-Speichervorrichtung im Schnitt;
- Fig. 3: eine Variante eines Werkzeugspeichers mit Führungsschienen, deren Verlauf neben einer radialen auch eine tangentiale Komponente aufweist;
- Fig. 4: ein an ein Biegewerkzeug angekoppeltes Transportmittel in einer Führungsschiene;
- Fig. 5: eine Ausführungsform einer Biegewerkzeug-Speichervorrichtung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

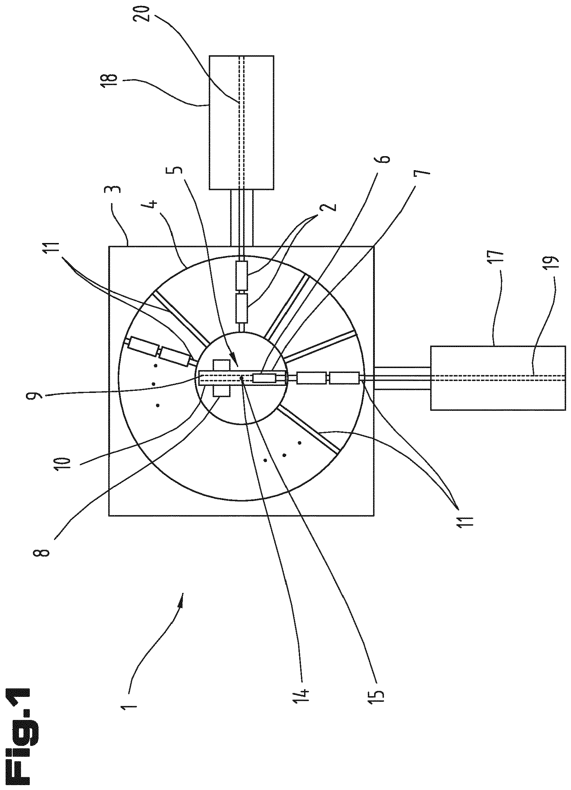

Fig. 1 zeigt eine Biegewerkzeug-Speichervorrichtung 1 zum Speichern von Biegewerkzeugen 2 mit einem Gestell 3, einem Werkzeugspeicher 4 und einer Transporteinrichtung 5.

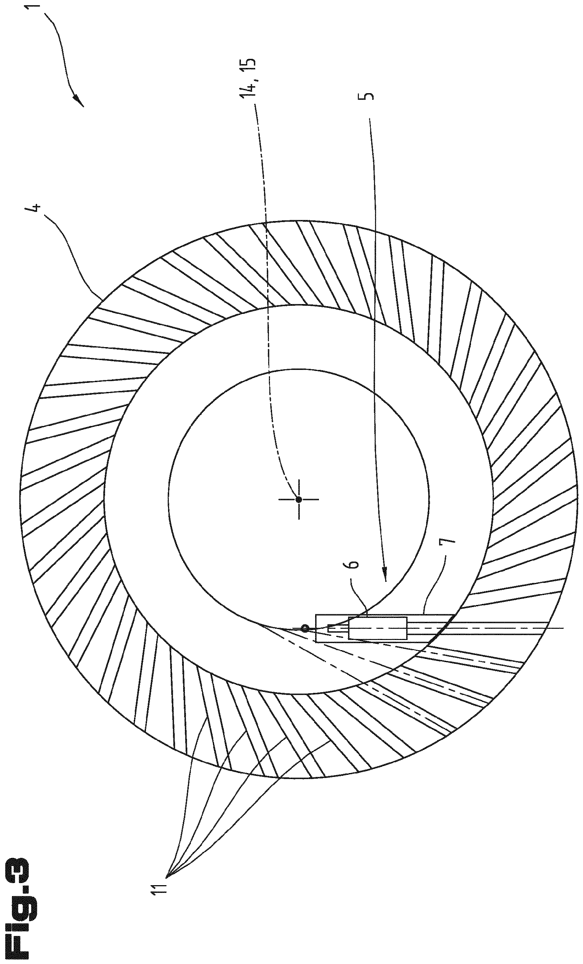

Der Werkzeugspeicher 4 ist an dem Gestell 3 um eine erste, vorliegendenfalls vertikale Drehachse 14 drehbar gelagert und weist eine Vielzahl von Führungsschienen 11 zum Halten und Führen von Biegewerkzeugen 2 auf. Die Führungsschienen 11 verlaufen - bezogen auf die Drehachse 14 - jeweils in radialer Richtung. In einer alternativen Ausführungsform können die Führungsschienen auch in einer Richtung mit radialer (und tangentialer) Komponente verlaufen (Fig. 3).

Die ebenfalls an dem Gestell 3 gelagerte Transporteinrichtung 5 weist ein ausfahrbares Transportmittel 6 zum Verschieben von Biegewerkzeugen 2 entlang der Führungsschienen 11 und eine Ablage 7, vorzugsweise in Form einer Führungsschiene, die das Transportmittel 6 im eingefahrenem Zustand hält, auf.

Die Ablage 7 ist im Bereich der drehachsennahen Enden der Führungsschienen 11 des Werkzeugspeichers 4 angeordnet und steht in verschiedenen Relativdrehstellungen zwischen Transporteinrichtung 5 und Werkzeugspeicher 4 jeweils mit einer anderen Führungsschiene 11 des Werkzeugspeichers 4 in fluchtender Ausrichtung.

Die Transporteinrichtung 5 ist relativ zum Gestell 3 und relativ zum Werkzeugspeicher 4 um eine zweite Drehachse 15, die im Wesentlichen mit der ersten Drehachse 14 zusammenfällt, drehbar.

Die Transporteinrichtung 5 weist einen auf das Transportmittel 6 (direkt oder indirekt) einwirkenden Antrieb 8 zum Ausfahren (aus der Ablage 7 in die Führungsschienen 11) bzw. Einfahren (in die Ablage 7) auf. Die Ablage 7 bildet dabei zusammen mit dem Antrieb 8 eine um die zweite Drehachse 15 drehbare Einheit.

In der dargestellten Ausführungsform umfasst die Transporteinrichtung 5 auch ein ausfahrbares, flexibles Zug- und Druckübertragungsmittel 9, insbesondere eine Kette, ein Band oder ein Seil, welches an dem Transportmittel 6 angebunden ist. Aus- bzw. Einfahren des Zug- und Druckübertragungsmittels 9 bewirkt entsprechend ein Aus- bzw. Einfahren des Transportmittels aus bzw. in die Ablage 7. Die Transporteinrichtung umfasst auch einen Speicher 10 (hier: einen Speicher mit spiralartig und/oder mäanderartig verlaufender Kulissenführung) zum Halten des Zug- und Druckübertragungsmittels 9 im eingefahrenen Zustand. Die Ablage 7 kann zusammen mit dem Speicher 10 eine um die zweite Drehachse 15 drehbare Einheit bilden, d.h. mit diesem drehfest verbunden sein.

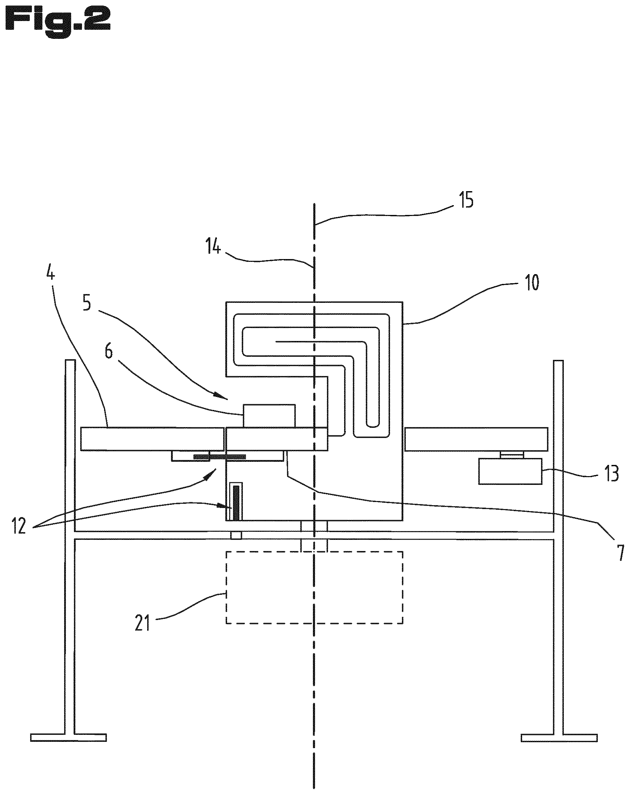

Fig. 2 zeigt die Biegewerkzeug-Speichervorrichtung 1 im Schnitt. Zu sehen ist, dass die Biegewerkzeug-Speichervorrichtung 1 eine vorzugsweise automatisiert betätigbare Kopplungseinrichtung 12 aufweist, durch die die Transporteinrichtung 5 mit dem Werkzeugspeicher 4 koppelbar ist. In der (in Fig. 2 dargestellten) Kopplungsstellung wird der Drehfreiheitsgrad der Transporteinrichtung 5 relativ zum Werkzeugspeicher 4 vorübergehend blockiert.

Durch eine weitere Kopplungseinrichtung 12, die mit zuvor beschriebener Kopplungseinrichtung auch eine funktionale Einheit bilden könnte, ist die die Transporteinrichtung 5 auch mit dem Gestell 3 koppelbar. Dadurch kann der Drehfreiheitsgrad der Transporteinrichtung 5 relativ zum Gestell 3 um die zweite Drehachse 15 vorübergehend blockiert werden. In Fig. 2 ist bzgl. dieser Kopplungseinrichtung der gelöste bzw. nicht blockierende Zustand dargestellt. Die Biegewerkzeug-Speichervorrichtung 1 kann einen ersten Drehantrieb 13 aufweisen, durch den der Werkzeugspeicher 4 relativ zum Gestell 3 um die erste Drehachse 14 drehbar ist. Zusätzlich, insbesondere bei Fehlen von Kopplungseinrichtungen 12 kann die Biegewerkzeug-Speichervorrichtung 1 auch einen zweiten Drehantrieb 21 aufweisen, durch den die Transporteinrichtung 5 unabhängig von dem Werkzeugspeicher 4 relativ zum Gestell 3 um die zweite Drehachse 15 drehbar ist.

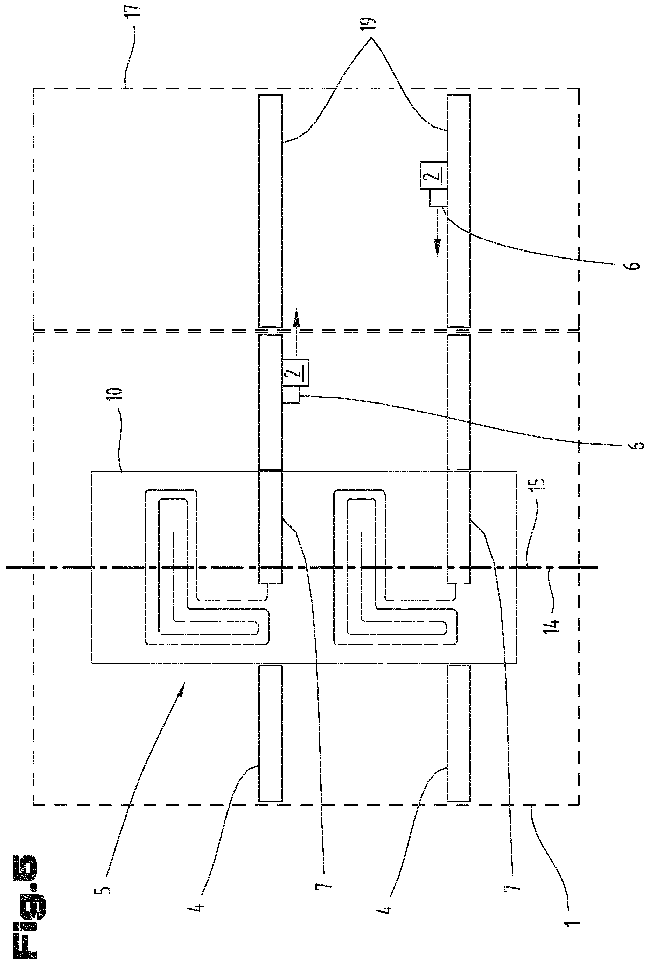

Das Transportmittel 6 weist eine lösbare Kupplung 16 zum Anbinden von Biegewerkzeugen 2 an das Transportmittel 6 auf. Im Kopplungszustand kann das Transportmittel die Biegewerkzeuge nicht nur schieben (angedeutet im oberen Bereich der Fig. 5), sondern auch ziehen (angedeutet im unteren Bereich der Fig. 5). Die Kupplung kann z.B. mechanisch, (elektro-)magnetisch oder unterdruck-vermittelt ausgebildet sein.

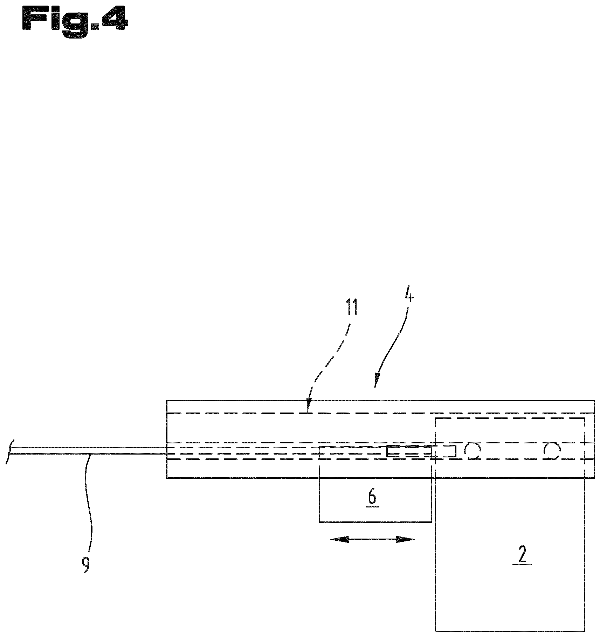

Wie in Fig. 4 zu sehen ist das Transportmittel 6 durch ein entlang der Führungsschienen 11, hier sogar in den Führungsschienen 11 des Werkzeugspeichers 4 bzw. in der Biegewerkzeughalterung 19, 20 einer Biegepresse 17, 18 verfahrbares Shuttle, z.B. in Form eines Schlittens oder Wagens, ausgebildet. Das Shuttle wird durch ein längliches Übertragungsmittel 9 geschoben bzw. gezogen. Das Übertragungsmittel 9 ist vorzugsweise aus Kettengliedern gebildet.

Das Zug- und Druckübertragungsmittel 9 ist entlang der Führungsschienen 11, hier in den Führungsschienen 11 des Werkzeugspeichers 4 verfahrbar.

Der Werkzeugspeicher 4 ist in der dargestellten Ausführungsform der Fig. 1 und 3 ringförmig; er könnte aber auch teilringförmig und/oder scheibenförmig ausgebildet sein. Die Transporteinrichtung 5 (mit der Ablage 7) ist im Zentrumsbereich des Werkzeugspeichers 4 angeordnet.

Fig. 5 zeigt eine bevorzugte Ausführungsform, bei der die Biegewerkzeug-Speichervorrichtung 1
- zumindest zwei Werkzeugspeicher 4 (einen für Oberwerkzeuge und einen für Unterwerkzeuge), die jeweils an dem Gestell 3 um eine erste, vorzugsweise vertikale Drehachse 14 drehbar gelagert sind und eine Vielzahl von Führungsschienen 11 zum Halten und Führen von Biegewerkzeugen 2 aufweisen, wobei die Führungsschienen 11 bezogen auf die Drehachse 14 jeweils in radialer Richtung oder in einer Richtung mit radialer Komponente verlaufen, und
- zumindest zwei an dem Gestell 3 gelagerte Transporteinrichtungen 5, die jeweils ein ausfahrbares Transportmittel 6 zum Verschieben von Bie-gewerkzeugen 2 entlang der Führungsschienen 11 des zugeordneten Werkzeugspeichers (4) und eine Ablage 7, vorzugsweise in Form einer Führungsschiene, die das Transportmittel 6 im eingefahrenem Zustand hält, aufweisen,
umfasst.

Die Ablagen 7 der Transporteinrichtungen 4 sind jeweils im Bereich der drehachsennahen Enden der Führungsschienen 11 des jeweiligen Werkzeugspeichers 4 angeordnet und stehen in verschiedenen Relativdrehstellungen zwischen der jeweiligen Transporteinrichtung 5 und dem zugeordneten Werkzeugspeicher 4 jeweils mit einer anderen Führungsschiene 11 des Werkzeugspeichers 4 in fluchtender Ausrichtung.

Die Transporteinrichtungen 5 sind relativ zum Gestell 3 und relativ zu den Werkzeugspeichern 4 um eine zweite Drehachse 15, die im Wesentlichen mit der ersten Drehachse 14 zusammenfällt, drehbar.

Die zumindest zwei Transporteinrichtungen 5 bilden in der dargestellten Ausführungsform eine um die zweite Drehachse 15 drehbare Einheit. Sie sind also immer nur gemeinsam drehbar.

In Fig. 1 ist auch eine Anordnung aus einer Biegewerkzeug-Speichervorrichtung 1 und zwei Biegepressen 17, 18, die jeweils Biegewerkzeughalterungen 19, 20 in Form von Führungsschienen aufweisen, zu sehen. Die zumindest zwei Biegepressen 17, 18 sind (hier über Zwischenführungen) an die Biegewerkzeug-Speichervorrichtung 1 angebunden und durch diese mit Biegewerkzeugen 2 beschickbar.

Dabei können die Biegewerkzeughalterungen 19 der einen Biegepresse 17 und die Biegewerkzeughalterungen 20 der anderen Biegepresse 18 zueinander geneigt sein, vorzugsweise um einen Winkel von zumindest 30°. Die Biegewerkzeughalterungen 19, 20 der zumindest zwei Biegepressen 17, 18 stehen in verschiedenen Drehstellungen des Werkzeugspeichers 4 relativ zum Gestell 3 jeweils mit einer anderen Führungsschiene 11 des Werkzeugspeichers 4 in fluchtender Ausrichtung.

Ein bevorzugtes Verfahren zum Betreiben einer Biegewerkzeug-Speichervorrichtung 1 bzw. einer oben beschriebenen Anordnung, kann folgende Schritte umfassen:
(a) Verfahren des Transportmittels 6 der Transporteinrichtung 5 entlang einer Führungsschiene 11 des Werkzeugspeichers 4 (optional auch bis in die Biegewerkzeughalterung einer Biegepresse),
(b) optional: Einfahren des Transportmittels 6 in die Ablage 7,
(c) Drehen der Transporteinrichtung 5 relativ zum Gestell 3 um die zweite Drehachse 15 und
(d) Verfahren des Transportmittels 6 entlang einer Führungsschiene 11 des Werkzeugspeichers 4.

Dabei kann während des Schrittes (a) und/oder während des Schrittes (d) durch das Transportmittel 6 zumindest ein in der Führungsschiene 11 des Werkzeugspeichers 4 gehaltenes Biegewerkzeug 2 entlang der Führungsschiene 11 verschoben werden (z.B. in Richtung einer Biegepresse oder aus einer Biegepresse kommend).

Während des Schrittes (c) kann die Transporteinrichtung 5 mit dem Werkzeugspeicher 4 gekoppelt sein und gemeinsam mit dem Werkzeugspeicher 4 relativ zum Gestell 3 um die Drehachse gedreht werden.

Für diverse Rangiermanöver kann es auch bevorzugt sein, wenn der Werkzeugspeicher 4 relativ zum Gestell 3 und relativ zur Transporteinrichtung 5 um die erste Drehachse 14 gedreht wird, vorzugsweise vor oder nach dem Schritt (a) und/oder vor und/oder nach dem Schritt (d). Alternativ oder in einem vorausgehenden und/oder nachfolgenden Verfahrensschritt kann es erforderlich sein, dass die Transporteinrichtung 5 relativ zum Gestell 3 und relativ zum Werkzeugspeicher 4 um die zweite Drehachse 15 gedreht wird, vorzugsweise vor oder nach dem Schritt (a) und/oder vor und/oder nach dem Schritt (d).

### Bezugszeichenaufstellung

- 1: Biegewerkzeug-Speichervorrichtung
- 2: Biegewerkzeug
- 3: Gestell
- 4: Werkzeugspeicher
- 5: Transporteinrichtung
- 6: Transportmittel
- 7: Ablage
- 8: Antrieb
- 9: Zug- und Druckübertragungsmittel
- 10: Speicher
- 11: Führungsschiene
- 12: Kopplungseinrichtung
- 13: Drehantrieb
- 14: Erste Drehachse
- 15: Zweite Drehachse
- 16: Kupplung
- 17: Biegepresse
- 18: Biegepresse
- 19: Biegewerkzeughalterung
- 20: Biegewerkzeughalterung
- 21: Drehantrieb

## Patentansprüche

1. Biegewerkzeug-Speichervorrichtung (1) zum Speichern von Biegewerkzeugen (2), umfassend:
- ein Gestell (3),
- zumindest einen Werkzeugspeicher (4), der an dem Gestell (3) um eine erste, vorzugsweise vertikale Drehachse (14) drehbar gelagert ist und eine Vielzahl von Führungsschienen (11) zum Halten und Führen von Biegewerkzeugen (2) aufweist, wobei die Führungsschienen (11) bezogen auf die Drehachse (14) jeweils in radialer Richtung oder in einer Richtung mit radialer Komponente verlaufen, und
- zumindest eine an dem Gestell (3) gelagerte Transporteinrichtung (5), die ein ausfahrbares Transportmittel (6) zum Verschieben von Biegewerkzeugen (2) entlang der Führungsschienen (11) des Werkzeugspeichers (4) und eine Ablage (7), vorzugsweise in Form einer Führungsschiene, die das Transportmittel (6) im eingefahrenem Zustand hält, aufweist,
wobei die Ablage (7) im Bereich der drehachsennahen Enden der Führungsschienen (11) des Werkzeugspeichers (4) angeordnet ist und in verschiedenen Relativdrehstellungen zwischen Transporteinrichtung (5) und Werkzeugspeicher (4) jeweils mit einer anderen Führungsschiene (11) des Werkzeugspeichers (4) in fluchtender Ausrichtung steht,
**dadurch gekennzeichnet, dass** die Transporteinrichtung (5) relativ zum Gestell (3) und relativ zum Werkzeugspeicher (4) um eine zweite Drehachse (15), die im Wesentlichen mit der ersten Drehachse (14) zusammenfällt, drehbar ist.

2. Biegewerkzeug-Speichervorrichtung nach Anspruch 1, **dadurch gekennzeichnet, dass** die Transporteinrichtung (5) einen Antrieb (8) zum Ausfahren bzw. Einfahren des Transportmittels (6) aufweist, wobei die Ablage (7) zusammen mit dem Antrieb (8) eine um die zweite Drehachse (15) drehbare Einheit bildet.

3. Biegewerkzeug-Speichervorrichtung nach Anspruch 1 oder 2, **dadurch gekennzeichnet, dass** die Transporteinrichtung (5)
- ein ausfahrbares, flexibles Zug- und Druckübertragungsmittel (9), insbesondere eine Kette, ein Band oder ein Seil, umfasst, welches an dem Transportmittel (6) angebunden ist, und
- einen Speicher (10), insbesondere eine Aufrolleinrichtung oder einen Speicher mit spiralartig und/oder mäanderartig verlaufender Kulissenführung, zum Halten des Zug- und Druckübertragungsmittels (9) im eingefahrenen Zustand
umfasst, wobei die Ablage (7) zusammen mit dem Speicher (10) eine um die zweite Drehachse (15) drehbare Einheit bildet.

4. Biegewerkzeug-Speichervorrichtung nach einem der vorhergehenden Ansprüche, **dadurch gekennzeichnet, dass** die Biegewerkzeug-Speichervorrichtung (1) eine vorzugsweise automatisiert betätigbare Kopplungseinrichtung (12) aufweist, durch die die Transporteinrichtung (5) mit dem Werkzeugspeicher (4) koppelbar ist, wodurch der Drehfreiheitsgrad der Transporteinrichtung (5) relativ zum Werkzeugspeicher (4) blockiert ist.

5. Biegewerkzeug-Speichervorrichtung nach einem der vorhergehenden Ansprüche, **dadurch gekennzeichnet, dass** die Biegewerkzeug-Speichervorrichtung (1) eine vorzugsweise automatisiert betätigbare Kopplungseinrichtung (12) aufweist, durch die die Transporteinrichtung (5) mit dem Gestell (3) koppelbar ist, wodurch der Drehfreiheitsgrad der Transporteinrichtung (5) relativ zum Gestell (3) um die zweite Drehachse (15) blockiert ist.

6. Biegewerkzeug-Speichervorrichtung nach einem der vorhergehenden Ansprüche, **dadurch gekennzeichnet, dass** die Biegewerkzeug-Speichervorrichtung (1) einen ersten Drehantrieb (13) aufweist, durch den der Werkzeugspeicher (4) relativ zum Gestell (3) um die erste Drehachse (14) drehbar ist,
und/oder dass die Biegewerkzeug-Speichervorrichtung (1) einen zweiten Drehantrieb (21) aufweist, durch den die Transporteinrichtung (5) unabhängig von dem Werkzeugspeicher (4) relativ zum Gestell (3) um die zweite Drehachse (15) drehbar ist.

7. Biegewerkzeug-Speichervorrichtung nach einem der vorhergehenden Ansprüche, **dadurch gekennzeichnet, dass** das Transportmittel (6) eine lösbare Kupplung (16) zum Anbinden von Biegewerkzeugen (2) an das Transportmittel (6) aufweist.

8. Biegewerkzeug-Speichervorrichtung nach einem der vorhergehenden Ansprüche, **dadurch gekennzeichnet, dass** das Transportmittel (6) durch ein entlang der Führungsschienen (11), vorzugsweise in den Führungsschienen (11) des Werkzeugspeichers (4) verfahrbares Shuttle, insbesondere in Form eines Schlittens oder Wagens, ausgebildet ist.

9. Biegewerkzeug-Speichervorrichtung nach einem der vorhergehenden Ansprüche, **dadurch gekennzeichnet, dass** das Zug- und Druckübertragungsmittel (9) entlang der Führungsschienen (11), vorzugsweise in den Führungsschienen (11) des Werkzeugspeichers (4) verfahrbar ist.

10. Biegewerkzeug-Speichervorrichtung nach einem der vorhergehenden Ansprüche, **dadurch gekennzeichnet, dass** der Werkzeugspeicher (4) ringförmig oder teilringförmig ist, wobei die Transporteinrichtung (5) im Zentrumsbereich des Werkzeugspeichers (4) angeordnet ist.

11. Biegewerkzeug-Speichervorrichtung nach einem der vorhergehenden Ansprüche, **dadurch gekennzeichnet, dass** die Biegewerkzeug-Speichervorrichtung (1)
- zumindest zwei Werkzeugspeicher (4), die jeweils an dem Gestell (3) um eine erste, vorzugsweise vertikale Drehachse (14) drehbar gelagert sind und eine Vielzahl von Führungsschienen (11) zum Halten und Führen von Biegewerkzeugen (2) aufweisen, wobei die Führungsschienen (11) bezogen auf die Drehachse (14) jeweils in radialer Richtung oder in einer Richtung mit radialer Komponente verlaufen, und
- zumindest zwei an dem Gestell (3) gelagerte Transporteinrichtungen (5), die jeweils ein ausfahrbares Transportmittel (6) zum Verschieben von Biegewerkzeugen (2) entlang der Führungsschienen (11) des zugeordneten Werkzeugspeichers (4) und eine Ablage (7), vorzugsweise in Form einer Führungsschiene, die das Transportmittel (6) im eingefahrenem Zustand hält, aufweisen,
umfasst, wobei die Ablagen (7) der Transporteinrichtungen (4) jeweils im Bereich der drehachsennahen Enden der Führungsschienen (11) des jeweiligen Werkzeugspeichers (4) angeordnet sind und in verschiedenen Relativdrehstellungen zwischen der jeweiligen Transporteinrichtung (5) und dem zugeordneten Werkzeugspeicher (4) jeweils mit einer anderen Führungsschiene (11) des Werkzeugspeichers (4) in fluchtender Ausrichtung stehen,
und dass die Transporteinrichtungen (5) relativ zum Gestell (3) und relativ zu den Werkzeugspeichern (4) um eine zweite Drehachse (15), die im Wesentlichen mit der ersten Drehachse (14) zusammenfällt, drehbar sind,
und dass vorzugsweise die zumindest zwei Transporteinrichtungen (5) eine um die zweite Drehachse (15) drehbare Einheit bilden.

12. Anordnung aus einer Biegewerkzeug-Speichervorrichtung (1) nach einem der vorhergehenden Ansprüche und zumindest zwei Biegepressen (17, 18), die jeweils Biegewerkzeughalterungen (19, 20) in Form von Führungsschienen aufweisen, wobei die zumindest zwei Biegepressen (17, 18) an die Biegewerkzeug-Speichervorrichtung (1) angebunden und durch diese mit Biegewerkzeugen (2) beschickbar sind, und wobei die Biegewerkzeughalterungen (19) der einen Biegepresse (17) und die Biegewerkzeughalterungen (20) der anderen Biegepresse (18) zueinander geneigt sind, vorzugsweise um einen Winkel von zumindest 30°, und wobei vorzugsweise die Biegewerkzeughalterungen (19, 20) der zumindest zwei Biegepressen (17, 18) in verschiedenen Drehstellungen des Werkzeugspeichers (4) relativ zum Gestell (3) jeweils mit einer anderen Führungsschiene (11) des Werkzeugspeichers (4) in fluchtender Ausrichtung stehen.

13. Verfahren zum Betreiben einer Biegewerkzeug-Speichervorrichtung (1) nach einem der Ansprüche 1 bis 11 und/oder einer Anordnung nach Anspruch 12, umfassend die Schritte:
(a) Verfahren des Transportmittels (6) der Transporteinrichtung (5) entlang einer Führungsschiene (11) des Werkzeugspeichers (4),
(b) optional: Einfahren des Transportmittels (6) in die Ablage (7),
(c) Drehen der Transporteinrichtung (5) relativ zum Gestell (3) um die zweite Drehachse (15) und
(d) Verfahren des Transportmittels (6) entlang einer Führungsschiene (11) des Werkzeugspeichers (4).

14. Verfahren nach Anspruch 13, **dadurch gekennzeichnet, dass** während des Schrittes (a) und/oder während des Schrittes (d) durch das Transportmittel (6) zumindest ein in der Führungsschiene (11) des Werkzeugspeichers (4) gehaltenes Biegewerkzeug (2) entlang der Führungsschiene (11) verschoben wird,
und/oder dass während des Schrittes (c) die Transporteinrichtung (5) mit dem Werkzeugspeicher (4) gekoppelt ist und gemeinsam mit dem Werkzeugspeicher (4) relativ zum Gestell (3) um die Drehachse gedreht wird.

15. Verfahren nach Anspruch 13 oder 14, **dadurch gekennzeichnet,**
**dass** der Werkzeugspeicher (4) relativ zum Gestell (3) und relativ zur Transporteinrichtung (5) um die erste Drehachse (14) gedreht wird, vorzugsweise vor oder nach dem Schritt (a) und/oder vor und/oder nach dem Schritt (d),
und/oder dass die Transporteinrichtung (5) relativ zum Gestell (3) und relativ zum Werkzeugspeicher (4) um die zweite Drehachse (15) gedreht wird, vorzugsweise vor oder nach dem Schritt (a) und/oder vor und/oder nach dem Schritt (d).

## Claims

1. A bending tool storage device (1) for storing bending tools (2), comprising:
- a rack (3),
- at least one tool storage (4), which is mounted on the rack (3) so as to be rotatable about a first, preferably vertical rotation axis (14), and comprises a plurality of guide rails (11) for holding and guiding bending tools (2), wherein the guide rails (11) each extend - with respect to the rotation axis (14) - in radial direction or in a direction with a radial component, and
- at least one transport device (5) mounted on the rack (3), said transport device (5) comprising an extendable transport means (6) for displacing bending tools (2) along the guide rails (11) of the tool storage (4) and a rest (7), preferably in the form of a guide rail, which holds the transport means (6) in the retracted state,
wherein the rest (7) is arranged in the region of those ends of the guide rails (11) of the tool storage (4) that are close to the rotation axis and is, in different relative rotational positions between the transport device (5) and the tool storage (4), in each case in aligned orientation with another guide rail (11) of the tool storage (4),
**characterized in that** the transport device (5) is rotatable relative to the rack (3) and relative to the tool storage (4) about a second rotation axis (15), which essentially coincides with the first rotation axis (14).

2. The bending tool storage device according to claim 1, **characterized in that** the transport device (5) comprises a drive (8) for extending and/or retracting the transport means (6), wherein the rest (7) along with the drive (8) forms a unit rotatable about the second rotation axis (15).

3. The bending tool storage device according to claim 1 or 2, **characterized in that** the transport device (5)
- comprises an extendable, flexible pull and push transfer means (9), in particular a chain, a belt or a rope, which is connected to the transport means (6), and
- comprises a storage (10), in particular a wind-up device or a storage with a slotted guide extending spirally and/or meandering, for holding the pull and push transfer means (9) in the retracted state,
wherein the rest (7) along with the storage (10) forms a unit rotatable about the second rotation axis (15).

4. The bending tool storage device according to one of the preceding claims, **characterized in that** the bending tool storage device (1) comprises a preferably automatedly actuatable coupling device (12), by means of which the transport device (5) can be coupled to the tool storage (4), whereby the degree of rotational freedom of the transport device (5) relative to the tool storage (4) is blocked.

5. The bending tool storage device according to one of the preceding claims, **characterized in that** the bending tool storage device (1) comprises a preferably automatedly actuatable coupling device (12), by means of which the transport device (5) can be coupled to the rack (3), whereby the degree of rotational freedom of the transport device (5) relative to the rack (3) about the second rotation axis (15) is blocked.

6. The bending tool storage device according to one of the preceding claims, **characterized in that** the bending tool storage device (1) comprises a first rotary drive (13) by means of which the tool storage (4) is rotatable relative to the rack (3) about the first rotation axis (14),
and/or that the bending tool storage device (1) comprises a second rotary drive (21) by means of which the transport device (5) is rotatable relative to the rack (3) about the second rotation axis (15) independently of the tool storage (4).

7. The bending tool storage device according to one of the preceding claims, **characterized in that** the transport means (6) comprises a releasable coupling (16) for coupling bending tools (2) to the transport means (6).

8. The bending tool storage device according to one of the preceding claims, **characterized in that** the transport means (6) is formed by a shuttle, in particular in the form of a carriage or a trolley, displaceable along the guide rails (11), preferably in the guide rails (11) of the tool storage (4).

9. The bending tool storage device according to one of the preceding claims, **characterized in that** the pull and push transfer means (9) is displaceable along the guide rails (11), preferably in the guide rails (11) of the tool storage (4).

10. The bending tool storage device according to one of the preceding claims, **characterized in that** the tool storage (4) is ring-shaped or partial-ring-shaped, wherein the transport device (5) is arranged in the central region of the tool storage (4).

11. The bending tool storage device according to one of the preceding claims, **characterized in that** the bending tool storage device (1) comprises
- at least two tool storages (4), which are each mounted on the rack (3) so as to be rotatable about a first, preferably vertical rotation axis (14), and comprise a plurality of guide rails (11) for holding and guiding bending tools (2), wherein the guide rails (11) each extend - with respect to the rotation axis (14) - in radial direction or in a direction with a radial component, and
- at least two transport devices (5) mounted on the rack (3), said transport devices (5) each comprising an extendable transport means (6) for displacing bending tools (2) along the guide rails (11) of the assigned tool storage (4) and a rest (7), preferably in the form of a guide rail, which holds the transport means (6) in the retracted state,
wherein the rests (7) of the transport devices (4) are each arranged in the region of those ends of the guide rails (11) of the tool storage (4) that are close to the rotation axis and are, in different relative rotational positions between the respective transport device (5) and the assigned tool storage (4), in each case in aligned orientation with another guide rail (11) of the tool storage (4),
and that the transport devices (5) are rotatable relative to the rack (3) and relative to the tool storages (4) about a second rotation axis (15), which essentially coincides with the first rotation axis (14),
and that preferably the at least two transport devices (5) form a unit rotatable about the second rotation axis (15).

12. An arrangement of a bending tool storage device (1) according to one of the preceding claims and at least two bending presses (17, 18) each comprising bending tool holders (19, 20) in the form of guide rails, wherein the at least two bending presses (17, 18) are connected to the bending tool storage device (1) and can be loaded with bending tools (2) by the latter, and wherein the bending tool holders (19) of the one bending press (17) and the bending tool holders (20) of the other bending press (18) are tilted towards one another, preferably by an angle of at least 30°, and wherein preferably the bending tool holders (19, 20) of the at least two bending presses (17, 18) are, in different rotational positions of the tool storage (4) relative to the rack (3), in each case in aligned orientation with another guide rail (11) of the tool storage (4).

13. A method for operating a bending tool storage device (1) according to one of claims 1 to 11 and/or an arrangement according to claim 12, comprising the steps:
(a) displacing the transport means (6) of the transport device (5) along a guide rail (11) of the tool storage (4),
(b) optionally: retracting the transport means (6) into the rest (7),
(c) rotating the transport device (5) relative to the rack (3) about the second rotation axis (15) and
(d) displacing the transport means (6) along a guide rail (11) of the tool storage (4).

14. The method according to claim 13, **characterized in that** during step (a) and/or during step (d) at least one bending tool (2) held in the guide rail (11) of the tool storage (4) is displaced along the guide rail (11) by means of the transport means (6),
and/or that during step (c), the transport device (5) is coupled to the tool storage (4) and is rotated relative to the rack (3) about the rotation axis along with the tool storage (4).

15. The method according to claim 13 or 14, **characterized in**
**that** the tool storage (4) is rotated relative to the rack (3) and relative to the transport device (5) about the first rotation axis (14), preferably before or after step (a) and/or before and/or after step (d),
and/or that the transport device (5) is rotated relative to the rack (3) and relative to the tool storage (4) about the second rotation axis (15), preferably before or after step (a) and/or before and/or after step (d).

## Revendications

1. Dispositif de stockage d'outils de pliage (1) pour le stockage d'outils de pliage (2), comprenant :
- un châssis (3),
- au moins un magasin d'outils (4) qui est logé de manière rotative autour d'un premier axe de rotation (14), de préférence vertical, au niveau du châssis (3), et une pluralité de rails de guidage (11) pour le maintien et le guidage d'outils de pliage (2), les rails de guidage (11) s'étendant chacun, par rapport à l'axe de rotation (14), dans la direction radiale ou dans une direction avec une composante radiale et
- au moins un dispositif de transport (5) logé au niveau du châssis (3), qui comprend un moyen de transport déployable (6) pour le coulissement d'outils de pliage (2) le long des rails de guidage (11) du magasin d'outils (4) et un stockage (7), de préférence sous la forme d'un rail de guidage, qui maintient le moyen de transport (6) dans l'état rétracté, le stockage (7) étant disposé au niveau des extrémités proche de l'axe des rails de guidage (11) du magasin d'outils (4) et étant aligné, dans différentes positions de rotation relative entre le dispositif de transport (5) et le magasin d'outils (4), avec un autre rail de guidage (11) du magasin d'outils (4),
**caractérisé en ce que** le dispositif de transport (5) peut être tourné par rapport au châssis (3) et par rapport au magasin d'outils (4) autour d'un deuxième axe de rotation (15) qui coïncide globalement avec le premier axe de rotation (14).

2. Dispositif de stockage d'outils de pliage selon la revendication 1, **caractérisé en ce que** le dispositif de transport (5) comprend un entraînement (8) pour le déploiement ou la rétraction du moyen de transport (6), le stockage (7) constituant, conjointement avec l'entraînement (8), une unité rotative autour du deuxième axe (15).

3. Dispositif de stockage d'outils de pliage selon la revendication 1 ou 2, **caractérisé en ce que** le dispositif de transport (5) comprend
- un moyen de transmission de traction et de compression flexible déployable (9), plus particulièrement une chaîne, une bande ou un câble, qui est relié au moyen de transport (6) et
- un magasin (10), plus particulièrement un dispositif d'enroulement ou un magasin avec un guidage à coulisse en spirale et/ou en zigzag, pour le maintien du moyen de transmission de traction et de compression (9) dans l'état rétracté le stockage (7) constituant, conjointement avec le magasin (10), une unité rotative autour du deuxième axe de rotation (15).

4. Dispositif de stockage d'outils de pliage selon l'une des revendications précédentes,
**caractérisé en ce que** le dispositif de stockage d'outils de pliage (1) comprend un dispositif de couplage (12), actionnable de préférence automatiquement, grâce auquel le dispositif de transport (5) peut être couplé avec le magasin d'outils (4), ce qui permet de bloquer le degré de liberté du dispositif de transport (5) par rapport au magasin d'outils (4).

5. Dispositif de stockage d'outils de pliage selon l'une des revendications précédentes,
**caractérisé en ce que** le dispositif de stockage d'outils de pliage (1) comprend un dispositif de couplage (12), actionnable de préférence automatiquement, grâce auquel le dispositif de transport (5) peut être couplé avec le châssis (3), ce qui permet de bloquer le degré de liberté du dispositif de transport (5) par rapport au châssis (3) autour du deuxième axe de rotation (15).

6. Dispositif de stockage d'outils de pliage selon l'une des revendications précédentes,
**caractérisé en ce que** le dispositif de stockage d'outils de pliage (1) comprend un premier entraînement rotatif (13) grâce auquel le magasin d'outils (4) peut être tourné par rapport au châssis (3) autour du premier axe de rotation (14),
et/ou **en ce que** le dispositif de stockage d'outils de pliage (1) comprend un deuxième entraînement rotatif (21) grâce auquel le dispositif de transport (5) peut être tourné indépendamment du magasin d'outils (4) par rapport au châssis (3) autour du deuxième axe de rotation (15).

7. Dispositif de stockage d'outils de pliage selon l'une des revendications précédentes,
**caractérisé en ce que** le moyen de transport (6) comprend un couplage amovible (16) pour la liaison d'outils de plage (2) au moyen de transport (6).

8. Dispositif de stockage d'outils de pliage selon l'une des revendications précédentes,
**caractérisé en ce que** le moyen de transport (6) est constitué d'une navette, plus particulièrement sous la forme d'un chariot, mobile le long des rails de guidage (11), de préférence dans les rails de guidage (11) du magasin d'outils (4).

9. Dispositif de stockage d'outils de pliage selon l'une des revendications précédentes,
**caractérisé en ce que** le moyen de transmission de traction et de compression (9) est mobile le long des rails de guidage (11), de préférence dans les rails de guidage (11) du magasin d'outils (4).

10. Dispositif de stockage d'outils de pliage selon l'une des revendications précédentes,
**caractérisé en ce que** le magasin d'outils (4) présente une forme annulaire ou annulaire partielle, le dispositif de transport (5) étant disposé dans la partie centrale du magasin d'outils (4).

11. Dispositif de stockage d'outils de pliage selon l'une des revendications précédentes,
**caractérisé en ce que** le dispositif de stockage d'outils de pliage (1) comprend
- au moins deux magasins d'outils (4), qui sont logés chacun au niveau du châssis (3) de manière rotative autour d'un premier axe de rotation (14) de préférence vertical et qui comprennent une pluralité de rails de guidage (11) pour le maintien et le guidage d'outils de pliage (2), les rails de guidage (11) s'étendant chacun, par rapport à l'axe de rotation (14), dans la direction radiale ou dans une direction avec une composante radiale et
- au moins deux dispositifs de transport (5) logés au niveau du châssis (3), qui comprennent chacun un moyen de transport déployable (6) pour le coulissement d'outils de pliage (2) le long des rails de guidage (11) du magasin d'outils (4) correspondant et un stockage (7), de préférence sous la forme d'un rail de guidage, qui maintient le moyen de transport (6) dans l'état rétracté,
les stockages (7) des dispositifs de transport (4) étant disposés chacun au niveau des extrémités proches de l'axe des rails de guidage (11) du magasin d'outils (4) correspondant et étant alignés, dans différentes positions de rotation relative entre le dispositif de transport (5) correspondant et le magasin d'outils (4) correspondant, avec un autre rail de guidage (11) du magasin d'outils (4),
et **en ce que** les dispositifs de transport (5) peuvent être tournés par rapport au châssis (3) et par rapport aux magasins d'outils (4) autour d'un deuxième axe de rotation (15) qui coïncide globalement avec le premier axe de rotation (14),
et **en ce que**, de préférence, les au moins deux dispositifs de transport (5) constituent conjointement une unité rotative autour du deuxième axe de rotation (15).

12. Disposition constituée d'un dispositif de stockage d'outils de pliage (1) selon l'une des revendications précédentes et d'au moins deux presses plieuses (17, 18) qui comprennent chacune des supports d'outils de pliage (19, 20) sous la forme de rails de guidage, les au moins deux presses plieuses (17, 18) étant reliées au dispositif de stockage d'outils de pliage (1) et pouvant être alimentées par celui-ci en outils de pliage (2) et les supports d'outils de pliage (19) d'une presse plieuse (17) et les supports d'outils de pliage (20) de l'autre presse plieuse (18) étant inclinés les uns vers les autres, de préférence avec un angle d'au moins 30° et de préférence les supports d'outils de pliage (19, 20) des au moins deux presses plieuses (17, 18) étant alignés chacun, dans différentes positions de rotation du magasin d'outils (4) par rapport au châssis (3), avec un autre rail de guidage (11) du magasin d'outils (4).

13. Procédé d'exploitation d'un dispositif de stockage d'outils de pliage (1) selon l'une des revendications 1 à 11 et/ou d'une disposition selon la revendication 12, comprenant les étapes suivantes :
(a) déplacement du moyen de transport (6) du dispositif de transport (5) le long d'un rail de guidage (11) du magasin d'outils (4),
(b) en option : rétraction du moyen de transport (6) dans le stockage (7),
(c) rotation du dispositif de transport (5) par rapport au châssis (3) autour du deuxième axe de rotation (15) et
(d) déplacement du moyen de transport (6) le long d'un rail de guidage (11) du magasin d'outils (4).

14. Procédé selon la revendication 13, **caractérisé en ce que**, pendant l'étape (a) et/ou pendant l'étape (d), au moins un outil de pliage (2) maintenu dans le rail de guidage (11) du magasin d'outils (4) est coulissé par le moyen de transport (6) le long du rail de guidage (11),
et/ou **en ce que**, pendant l'étape (c), le dispositif de transport (5) est couplé avec le magasin d'outils (4) et est tourné, conjointement avec le magasin d'outils (4) par rapport au châssis (3) autour de l'axe de rotation.

15. Procédé selon la revendication 13 ou 14, **caractérisé en ce que**
le magasin d'outils (4) est tourné par rapport au châssis (3) et par rapport au dispositif de transport (5), autour du premier axe de rotation (14), de préférence avant ou après l'étape (a) et/ou avant et/ou après l'étape (d),
et/ou **en ce que** le dispositif de transport (5) est tourné par rapport au châssis (3) et par rapport au magasin d'outils (4) autour du deuxième axe de rotation (15), de préférence avant ou après l'étape (a) et/ou avant et/ou après l'étape (d).
